# EUROPÄISCHE PATENTSCHRIFT

(11) **EP 2 008 508 B1**
(45) Veröffentlichungstag und Bekanntmachung des Hinweises auf die Patenterteilung: **13.04.2011**
(21) Anmeldenummer: 08010874.9
(22) Anmeldetag: 16.06.2008
(51) Int. Cl.: A01F 29/22, A01D 43/08

(54) **Erntemaschine mit Güteüberwachung der Schneiden**
Harvesting machine with monitoring of cut parts
Moissonneuse dotée d'une surveillance de la qualité des produits des coupes

(30) Priorität: 27.06.2007 DE 102007030167
(43) Veröffentlichungstag der Anmeldung: 31.12.2008
(73) Patentinhaber: CLAAS Selbstfahrende Erntemaschinen GmbH, 33426 Harsewinkel (DE)
(72) Erfinder: Huster, Jochen, 33330 Gütersloh (DE); Behnke, Willi, 33803 Steinhagen (DE); Deppe, Markus, 33790 Halle (DE); Pollklas, Manfred, 33378 Rheda-Wiedenbrück (DE)
(74) Vertreter: Heuer, Wilhelm

(56) Entgegenhaltungen:
- EP-A- 1 520 464
- EP-A- 1 522 214
- US-A- 6 119 442

## Beschreibung

Die vorliegende Erfindung betrifft eine fahrbare Erntemaschine mit einer Fahrerkabine, wenigstens einer Aufnahmeeinrichtung zum Aufnehmen von Erntegut, einer mit wenigstens einer Schneide versehenen Schneideinrichtung zum Zerkleinern des aufgenommenen Erntegutes und einer Kamera, die eingerichtet ist, Bilder der Schneide zu erzeugen.

Eine solche Erntemaschine ist aus EP 1 522 214 A2 bekannt.

Die von der Kamera erzeugten Bilder werden bei dieser bekannten Erntemaschine einem Bildverarbeitungssystem zugeführt, um den Schärfegrad der Schneiden vollautomatisch einzuschätzen und, wenn die Schärfe als unzureichend eingeschätzt wird, einen Schleifvorgang auszulösen oder ein Signal an den Fahrer auszugeben, um ihn aufzufordern, dies zu tun.

Die Beurteilung, ob die Schneiden scharf genug sind oder ob sie geschliffen werden müssen, hängt nicht nur von der objektiven Schärfe der Schneiden ab, sondern auch von Randbedingungen, wie etwa der Art des Erntegutes, der Größe einer noch abzuerntenden Fläche, der dafür verfügbaren Zeit, etc.. So kann es für einen Anwender im Feldeinsatz durchaus sinnvoll sein, trotz an sich unzureichender Schärfe der Schneiden einen Schleifvorgang aufzuschieben und eine Restfläche noch abzuernten, und den aufgeschobenen Schleifvorgang nachzuholen, wenn die Maschine abgestellt ist oder sich auf dem Weg von einem Einsatzort zum nächsten befindet. Solche Entscheidungskriterien können bei der aus EP 1 522 214 A2 bekannten Erntemaschine nicht berücksichtigt werden; wenn der Schleifvorgang automatisch ausgelöst wird, muss der Benutzer ihn hinnehmen, auch wenn dadurch seine Arbeit verzögert wird, und falls die Maschine lediglich ein Signal erzeugt, um den Benutzer aufzufordern, einen Schleifvorgang auszulösen, ist es für den Benutzer kaum möglich, zu beurteilen, ob der Schleifvorgang aufgeschoben werden darf oder nicht.

Aus US 6 119 442 A ist ein Mähdrescher bekannt, in welchem Bildsensoren zum Überwachen von Materialflüssen vorgesehen sind und Bilder dieser Sensoren einem Benutzer auf einer Anzeige sichtbar gemacht werden können.

Aufgabe der vorliegenden Erfindung ist, eine Erntemaschine der eingangs angegebenen Art zu schaffen, die dem Benutzer mit minimalem Zeitaufwand eine Entscheidung über die Notwendigkeit eines Schleifvorganges unter Berücksichtigung der oben genannten Randbedingungen ermöglicht.

Die Aufgabe wird dadurch gelöst, dass ein Monitor zur Wiedergabe von von der Kamera erzeugten Bildern in der Fahrerkanzel angebracht ist. So kann der Benutzer, ohne die Fahrerkanzel zu verlassen, sich jederzeit selbst ein Bild über die Notwendigkeit des Schleifens verschaffen.

Um eine mit dem Schleifen verbundene Arbeitsunterbrechung der Erntemaschine zu minimieren, ist eine Schleifeinrichtung zum Schärfen der Schneide vorzugsweise von der Fahrerkanzel aus steuerbar.

Um eine Beeinträchtigung der Schleifeinrichtung durch während des Erntebetriebes umher fliegende Erntegutbestandteile zu minimieren, ist die Schleifeinrichtung vorzugsweise in einem Gehäuse untergebracht, das während des Zerkleinerns von Erntegut geschlossen ist, um die Schleifeinrichtung zu schützen, und während des Schleifens offen ist.

Die Kamera kann zweckmäßigerweise in demselben Gehäuse wie die Schleifeinrichtung untergebracht sein, um ebenfalls vor umher fliegendem zerkleinertem Erntegut geschützt zu sein.

Der Monitor ist vorzugsweise eingerichtet, Bilder von mehreren Schneiden der Schneideinrichtung überlagert darzustellen. Dies ermöglicht nicht nur eine schnelle Beurteilung der Qualität sämtlicher Schneiden, sondern auch eine erhöhte Sicherheit bei der Beurteilung der Notwendigkeit des Schleifens, da eine eventuell mangelhafte Schärfe einzelner Schneiden im Vergleich mit anderen Schneiden für einen menschlichen Benutzer leichter zu erkennen ist, als wenn jeweils nur eine Schneide für sich angezeigt wird.

Um die Überlagerung der Bilder der Schneiden zu erhalten, ist vorzugsweise eine Auslöseeinrichtung eingerichtet, die Erzeugung eines Bildes einer Schneide jeweils dann auszulösen, wenn die Schneide sich in einem für sie spezifischen Bereich des Blickfeldes der Kamera befindet. So ist es möglich, das überlagerte Bild ohne Bildverschiebungsoperationen zu erzeugen; es genügt, aus von der Kamera aufgenommenen Bildern jeweils die eine Schneide zeigenden Bereiche zu extrahieren und diese unter Beibehaltung ihrer Position zu einem überlagerten Bild zusammenzufügen.

Um die zusammenzufügenden Bilder zu erhalten, ist an einer rotierenden Trommel, die Schneiden und von einem Sensor der Auslöseeinrichtung erfassbare Auslösemarken trägt, jeder Schneide eine Auslösemarke zugeordnet, wobei zwischen jeder Schneide und der ihr zugeordneten Auslösemarke ein unterschiedlicher Winkelversatz besteht.

Zusammen mit einem Bild wenigstens einer Schneide sollte der Monitor vorzugsweise in der Lage sein, auch eine Skala anzuzeigen, die es dem Benutzer ermöglicht, die Breite der Schneide (und damit die Dringlichkeit des Nachschleifens) quantitativ, ohne Vergleich mit anderen Schneiden zu beurteilen. Die Skala kann auch dazu dienen, dem Benutzer eine Abschätzung der Breite eines die Schneide tragenden Messers (und damit eine Abschätzung der Restlebensdauer des Messers) zu ermöglichen.

Um eine Beurteilung auch lokaler Schäden wie Kerben oder Scharten an den Schneiden zu ermöglichen, ist der Monitor vorzugsweise eingerichtet, Bilder in unterschiedlichen Maßstäben anzuzeigen.

Um den Benutzer die Entscheidung über ein Nachschleifen zu erleichtern, ist vorteilhafterweise der Monitor eingerichtet, an den Schneiden erfasste Schadstellen durch eine Hervorhebung zu kennzeichnen.

Um die Übersichtlichkeit des Bildes zu wahren, ist die Zahl der Hervorhebungen zweckmäßigerweise begrenzt, und nur die schwerwiegendsten unter den erfassten Schadstellen werden durch eine Hervorhebung gekennzeichnet.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: eine schematische Ansicht eines Feldhäckslers als Beispiel einer erfindungsgemäßen Erntemaschine;
- Fig. 2: ein vergrößertes Detail aus Fig. 1;
- Fig. 3: eine schematische axiale Ansicht einer Häckseltrommel und ihrer Umgebung gemäß der Erfindung; und
- Fig. 4: schematisch ein mit der Kamera der Erntemaschine erhältliches Bild.

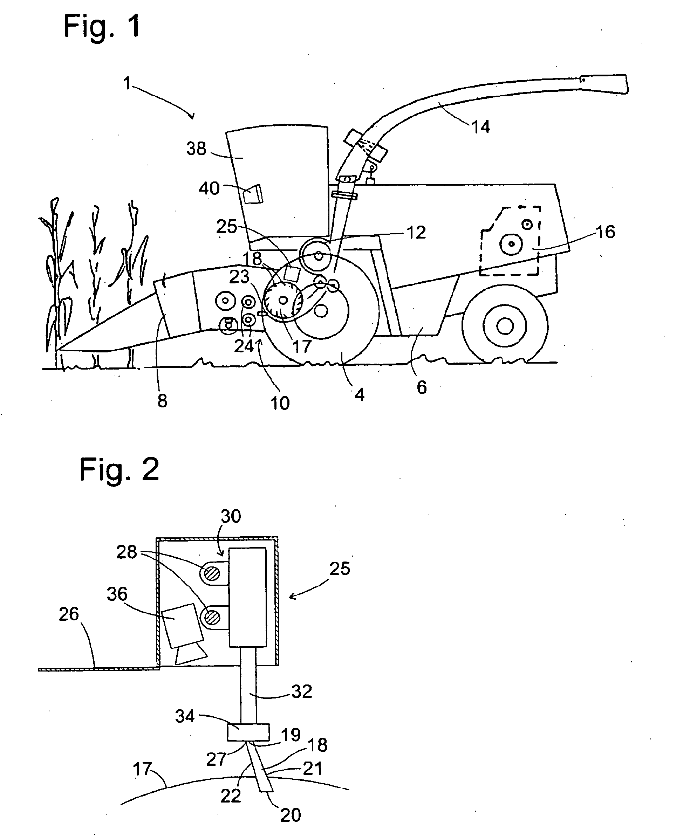

Fig. 1 zeigt eine schematische Darstellung eines selbstfahrenden Feldhäckslers 1 als Beispiel für eine erfindungsgemäße Erntemaschine. Wie anhand der folgenden Beschreibung deutlich werden wird, ist die Erfindung ohne Weiteres auch auf andere Typen von Erntemaschinen, insbesondere auf Mähdrescher, übertragbar. Der Feldhäcksler 1 ist ausgestattet mit einem Fahrwerk 4, einem Fahrzeugrahmen 6, einem vorne am Fahrzeugrahmen 6 montierten Aufnahmevorsatz 8, der zum Aufnehmen von Erntegut vom Boden und zum Einspeisen desselben in einen Förderkanal dient, sowie einem Häckselwerk 10, einem Nachbeschleuniger 12 und einem Auswurfkrümmer 14, die nacheinander in dem Förderkanal angeordnet sind, und einem Motor 16 zum Antrieb des Fahrwerkes 4 sowie der beweglichen Teile des Aufnahmevorsatzes 8, des Häckselwerkes 10 und des Nachbeschleunigers 12.

Der Aufnahmevorsatz 8 des Feldhäckslers 1 ist austauschbar. In Fig. 1 ist der Aufnahmevorsatz ein Maisgebiss. An seiner Stelle können andere Typen von Vorsatz, zum Beispiel zum Mähen stehender Grünpflanzen oder zum Aufsammeln von in Schwaden liegendem Heu, montiert werden.

Das Häckselwerk 10 umfasst eine drehangetriebene Häckseltrommel 17, die mit gleichmäßig über ihren Umfang verteilten Häckselmessern 18 besetzt ist. Die rotierenden Häckselmesser 18 bilden zusammen mit einem ortsfesten Gegenmesser 23 einen Schneidspalt, in dem mit Hilfe von Förderwalzen 24 zugeführtes Erntegut zerkleinert wird.

Wie in Fig. 2 gezeigt, haben die Häckselmesser 18 einen trapezförmigen Querschnitt, mit zwei parallelen Seiten 19, 20 und konvergenten Seiten 21, 22. Die breitere 20 der parallelen Seiten ist der Häckseltrommel 17 zugewandt. Eine Kante der schmaleren Seite 19 bildet jeweils eine Schneide 27 des Häckselmessers 18.

Die Häckselmesser 18 unterliegen im Betrieb fortwährendem Verschleiß und müssen von Zeit zu Zeit nachgeschliffen werden, um einen dauerhaft effizienten Betrieb des Feldhäckslers 1 zu ermöglichen. Zu diesem Zweck ist in einem Gehäuse 25 benachbart zu der Häckseltrommel 17 eine Schleifeinrichtung untergebracht, die in Fig. 2 genauer gezeigt ist.

Das Gehäuse 25 ist in Fig. 2 als ein im Wesentlichen quaderförmiger Kasten mit einem der Häckseltrommel 17 zugewandten Deckel 26 dargestellt. Während des Häckselbetriebes ist der Deckel 26 geschlossen, um Häckselgut aus dem Gehäuse 25 fernzuhalten; Fig. 2 zeigt das Gehäuse in offener Stellung, mit zur Seite verschobenem Deckel 26. Es versteht sich, dass auch beliebige andere Formen des Gehäuses in Betracht kommen, die während des Erntebetriebs geschlossen gehalten und zum Schleifen geöffnet werden können, zum Beispiel mit auseinanderklappbaren Halbschalen oder dergl..

Das Gehäuse 25 enthält Führungsschienen 28, die sich quer zur Ebene der Fig. 2 über die gesamte Länge der Häckseltrommel 17 erstrecken. An den Führungsschienen 28 ist ein Schlitten 30 verschiebbar, der einen mit Hilfe eines Stellgliedes 32 aus dem Gehäuse 25 ausfahrbaren Schleifstein 34 trägt. Um die Häckselmesser 18 zu schleifen, wird der Schleifstein 34 vom Stellglied 32 gegen die Häckselmesser 18 gedrückt, und während diese unter dem Schleifstein 34 wegrotieren, wird dieser langsam entlang der Führungsschienen 28 verschoben. Die Drehgeschwindigkeit der Häckseltrommel 16 und die Geschwindigkeit des Schleifsteines 34 sind so aufeinander abgestimmt, dass der in einer Umdrehung der Häckseltrommel 17 vom Schleifstein 34 zurückgelegte Weg kleiner als dessen Breite ist. So wird im Laufe einer Verschiebung des Schleifsteines 34 von einem Ende der Häckseltrommel 17 zum anderen jedes Häckselmesser 18 auf der gesamten Länge seiner Schneide 27 geschliffen.

In der Ausgestaltung der Fig. 2 ist in dem Gehäuse 25 ferner eine elektronische Kamera 36 untergebracht, die auf die Häckseltrommel 17 ausgerichtet ist, um Bilder von den Schneiden der Häckselmesser 18 aufzunehmen. Fig. 2 zeigt eine einzige ortsfeste Kamera 36; um die Schneiden der Häckselmesser 18 auf ihrer gesamten Länge abzubilden, können mehrere Kameras 36 in dem Gehäuse 25 vorgesehen sein, oder es kann eine einzelne Kamera 36 entlang der Führungsschienen 28 verschiebbar sein, um mit ihr mehrere Bilder von aufeinanderfolgenden Abschnitten jedes Häckselmessers 18 zu erzeugen.

Wiederum bezogen auf Fig. 1 ist in einer Fahrerkabine 38 des Feldhäckslers 1 ein Monitor 40 angebracht, um von der Kamera (oder den Kameras) 36 aufgenommene Bilder anzuzeigen. Es ist an sich bekannt, einen solchen Monitor 40 in der Fahrerkabine 38 vorzusehen, um darauf dem Fahrer Betriebsparameter wie etwa Fahrzeuggeschwindigkeit, Erntegutdurchsatz, Feuchtegrad des Erntegutes oder dergl. anzuzeigen. Da das Nachschleifen der Häckselmesser 18 jeweils in Unterbrechungen des Erntebetriebes stattfindet, in denen es nicht erforderlich ist, diese Parameter anzuzeigen, kann ein solcher Monitor ohne Mehrkosten für die Zwecke der vorliegenden Erfindung genutzt werden.

Im einfachsten Fall zeigt der Monitor 40 jeweils ein einzelnes zu einem bestimmten Zeitpunkt von der Kamera (oder einer der Kameras) 36 aufgenommenes Bild. Vorzugsweise jedoch ist zwischen die Kamera (oder Kameras) 36 und den Monitor 40 ein Mikroprozessor zwischengeschaltet, um von mehreren Kameras 36 gleichzeitig oder einer Kamera 36 sukzessive erhaltene Bilder von Ausschnitten eines Häckselmessers 18 jeweils zu einem Gesamtbild zusammenzufügen, das auf dem Monitor 40 angezeigt wird, um dem Benutzer einen globalen Überblick über die Qualität der Schneide 27 des Messers 18 zu liefern. Um eine genaue Inspektion bestimmter Stellen eines Messers 18 zu ermöglichen, kann eine Benutzerschnittstelle vorgesehen sein, die es dem Benutzer erlaubt, Ausschnitte des auf dem Monitor 40 gezeigten Bildes auszuwählen und sich diese vergrößert anzeigen zu lassen.

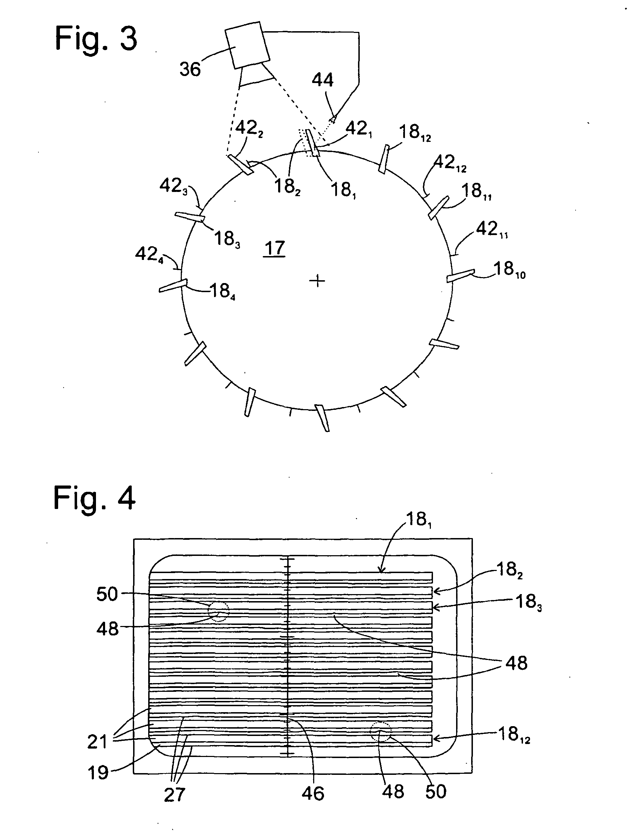

Fig. 3 zeigt eine schematische Ansicht der Häckseltrommel 17 und einer von eventuell mehreren Kameras 36 zum Aufnehmen von Bildern der Häckselmesser 18. Die Häckselmesser, hier insgesamt zwölf Stück, mit 18₁ bis 18₁₂ bezeichnet, sind gleichmäßig in einem Winkelabstand von jeweils 30° über den Umfang der Häckseltrommel 16 verteilt. Ferner sind am Umfang der Häckseltrommel 16 Auslösemarken 42₁ bis 42₁₂ in gleicher Zahl wie die Häckselmesser 18 verteilt, die hier zusammen elf Winkelintervalle von jeweils 28° und eines von 52° begrenzen. Allgemein gesagt können, wenn n die Zahl der Häckselmesser 18 ist, n-1 Intervalle mit einem Winkel von 360°/n-ε und ein Intervall mit einem Winkel von 360°/n+(n-1)ε vorhanden sein.

Ein ortsfester Sensor 44 löst jeweils bei Erfassung einer der Auslösemarken 42₁ bis 42₁₂ die Kamera 36 aus, so dass diese ein Bild aufnimmt. Auslösemarken 42₁ bis 42₁₂ und Sensor 44 können von unterschiedlichen komplementären Arten sein, zum Beispiel kann der Sensor 44 eine Lichtschranke sein und die Auslösemarken sind Reflektoren oder farblich von ihrer Umgebung abgesetzte Markierungen, oder die Auslösemarken 42 sind Vorsprünge, die einen als Sensor 44 fungierenden Schalter betätigen, oder es kann sich um Magneten handeln, die einen Hallsensor 44 auslösen.

In der Konfiguration der Fig. 3 erfasst der Sensor 44 soeben die Auslösemarke 42₁ in 12-Uhr-Stellung an der Häckseltrommel 17. Die dadurch ausgelöste Kamera 36 fotografiert das der Auslösemarke 42₁ benachbarte Häckselmesser 18₁, das sich nahe am rechten Rand des in der Fig. 3 durch gestrichelte Linien angedeuteten Blickfeldes der Kamera 36 befindet.

Wenn die Häckseltrommel 17 im Uhrzeigersinn rotiert, gelangt als nächstes eine Auslösemarke 42₂ in den Erfassungsbereich des Sensors 44. Wenn dies geschieht, befindet sich ein der Auslösemarke 42₂ zugeordnetes Häckselmesser 18₂ an der in Fig. 3 als gestrichelter Umriss dargestellten Position. Auf einem durch die Auslösemarke 42₂ ausgelösten Bild der Kamera 36 befindet sich das Häckselmesser 18₂ daher an einer anderen Stelle als das zuvor fotografierte Messer 18₁.

Im Laufe einer Umdrehung der Häckseltrommel 17 werden so der Reihe nach alle Häckselmesser 18₁ bis 18₁₂ fotografiert, wobei die Abbildungen der Häckselmesser in den aufgenommenen Bildern sich jeweils an verschiedenen Stellen befinden.

Um ein Bild auf dem Monitor 40 anzuzeigen, das, wie in Fig. 4 dargestellt, alle Häckselmesser gleichzeitig zeigt, genügt es, wenn der Mikroprozessor in den von der Kamera 36 gelieferten Bildern jeweils dasjenige Zwölftel der Bildfläche ermittelt, in dem das Messer 18 abgebildet ist, die restliche Bildfläche schwarz setzt und die Helligkeitswerte der so sukzessive für alle Messer 18 erhaltenen Bilder pixelweise aufaddiert.

Noch einfacher ist die Bildverarbeitung, wenn bereits durch eine geeignete Beleuchtung oder Farbgebung der Häckseltrommel 17 sichergestellt ist, dass in den aufgenommenen Bildern lediglich die Schneiden 27 der Häckselmesser 18 hell erscheinen. Dann können, um ein überlagertes Bild aller Häckselmesser 18 zu erhalten, die Helligkeitswerte der Einzelbilder ohne jegliche Vorverarbeitung pixelweise aufaddiert werden.

Alternativ zu dem in Fig. 3 gezeigten Aufbau kommt auch eine (nicht in einer Fig. dargestellte) Ausgestaltung in Betracht, bei der eine Kamera 36 gekoppelt an die Drehung der Häckseltrommel 17 in gleichmäßigen Winkelabständen von 360°/n zum Aufnehmen von Bildern der Häckselmesser 18 ausgelöst wird, z.B. mit Hilfe eines Sensors 44, der auf die Häckselmesser 18 selbst als Auslösemarke anspricht, wobei jedem Häckselmesser ein Anzeigebereich auf dem Monitor 40 zugeordnet ist, wo sein Bild angezeigt wird.

Fig. 4 zeigt, wie bereits erwähnt, ein mit dem in Fig. 3 gezeigten Aufbau oder der oben erwähnten alternativen Ausgestaltung auf dem Monitor 40 erhältliches Bild, in dem die Häckselmesser 18 jeweils unmittelbar übereinander zu sehen sind. Das Bild liefert dem Benutzer eine Übersicht über die Qualität sämtlicher Schneiden 27; aus Unregelmäßigkeiten im Verlauf der Schneiden 27 kann der Benutzer schnell und genau einschätzen, ob und wie nötig ein Nachschleifen ist. Anhand eines entsprechenden, jeweils nach einem Schleifvorgang angezeigten Bildes kann er entscheiden, ob die Schärfe der Messer 18 wieder ausreichend ist, oder ob der Schleifvorgang wiederholt werden muss. Anhand einer in das Bild eingeblendeten Skala 46 kann der Benutzer ferner die Breite der dem Schleifstein 34 ausgesetzten Stirnflächen abmessen. Da, wie in Fig. 3 zu sehen, die Häckselmesser 18 von außen nach innen dicker werden, gibt die Breite ihrer Stirnflächen 19 Aufschluss darüber, wie weit die Häckselmesser 18 verschlissen sind und ob ein Austausch erforderlich ist.

Einer bevorzugten Weiterbildung zufolge ist der Mikroprozessor programmiert, um eine Analyse des Verlaufs der dargestellten Schneiden 27 vorzunehmen und eine kleine Zahl der jeweils auffälligsten Schadstellen wie etwa Scharten oder Ausbrüche 48 im angezeigten Bild hervorzuheben. Die Hervorhebung kann wie in Fig. 4 gezeigt, aus einem um die Schadstelle herum dargestellten Umrandung 50 bestehen; denkbar ist auch, die Schadstelle 48 und ihre nächste Umgebung durch lokal erhöhten Bildkontrast, Helligkeit oder eine veränderte Farbdarstellung hervorzuheben. So kann der Fahrer die schwerwiegendsten Schäden an den Schneiden 27 schnell erkennen, und er kann insbesondere entscheiden, ob die Schäden so stark sind, dass ein Nachschleifen sinnlos ist, weil es zwar andere Bereiche der Messer 18 verschleißt, die Schadstelle 48 aber nicht mehr beseitigen kann. Zweckmäßigerweise umfasst die Analyse auch einen Schritt des Beurteilens des Ausmaßes einer erfassten Abweichung des Verlaufs der Schneide 27 vom Ideal einer geraden Linie und des Beurteilens einer Abweichung als Schadstelle 48 nur dann, wenn die Abweichung ein vorgegebenes Mindestmaß übersteigt. So ist sichergestellt, dass bei guter Qualität der Schneiden 27 der Fahrer nicht Umrandungen 50 an Stellen angezeigt bekommt, die ein Nachschleifen gar nicht erfordern.

### Bezugszeichen

- 1: Feldhäcksler
- 4: Fahrwerk
- 6: Fahrzeugrahmen
- 8: Aufnahmevorsatz
- 10: Häckselwerk
- 12: Nachbeschleuniger
- 14: Auswurfkrümmer
- 16: Motor
- 17: Häckseltrommel
- 18: Häckselmesser
- 19: Seite
- 20: Seite
- 21: Seite
- 22: Seite
- 23: Gegenmesser
- 24: Förderwalze
- 25: Gehäuse
- 26: Deckel
- 27: Schneide
- 28: Führungsschiene
- 30: Schlitten
- 32: Stellglied
- 34: Schleifstein
- 36: Kamera
- 38: Fahrerkabine
- 40: Monitor
- 42: Auslösemarke
- 44: Sensor
- 46: Skala
- 48: Schadstelle
- 50: Umrandung

## Patentansprüche

1. Erntemaschine (1) mit einer Fahrerkabine (38), wenigstens einer Aufnahmeeinrichtung (8) zum Aufnehmen von Erntegut, einer mit wenigstens einer Schneide (23) versehenen Schneideinrichtung (17, 18) zum Zerkleinern des aufgenommenen Ernteguts, und wenigstens einer Kamera (36), die eingerichtet ist, Bilder der Schneide (23) zu erzeugen, **dadurch gekennzeichnet, dass** ein Monitor (40) zur Wiedergabe von von der Kamera (36) erzeugten Bildern in der Fahrerkabine (38) angebracht ist.

2. Erntemaschine nach Anspruch 1, **dadurch gekennzeichnet, dass** eine Schleifeinrichtung (30, 32, 34) zum Schärfen der Schneide (23) von der Fahrerkabine (38) aus steuerbar ist.

3. Erntemaschine nach Anspruch 2, **dadurch gekennzeichnet, dass** die Schleifeinrichtung (30, 32, 34) in einem Gehäuse (25) untergebracht ist, das während des Zerkleinerns von Erntegut geschlossen und während des Schärfens offen ist.

4. Erntemaschine nach Anspruch 3, **dadurch gekennzeichnet, dass** die Kamera (36) in dem Gehäuse (25) untergebracht ist.

5. Erntemaschine nach einem der vorhergehenden Ansprüche, **dadurch gekennzeichnet, dass** der Monitor (40) eingerichtet ist, Bilder von mehreren Schneiden (23) der Schneideinrichtung (17, 18) überlagert darzustellen.

6. Erntemaschine nach Anspruch 5, **gekennzeichnet durch** eine Auslöseeinrichtung (42, 44), die eingerichtet ist, die Erzeugung eines Bildes einer Schneide (23) auszulösen, wenn die Schneide (23) sich in einem für sie spezifischen Bereich des Blickfeldes der Kamera (36) befindet.

7. Erntemaschine nach Anspruch 6, **dadurch gekennzeichnet, dass** eine rotierende Trommel (17) die Schneiden (23) und von einem Sensor (44) der Auslöseeinrichtung (42, 44) erfassbare Auslösemarken (42) trägt, wobei jeder Schneide (23) eine der Auslösemarken (42) zugeordnet ist und zwischen jeder Schneide (23) und der ihr zugeordneten Auslösemarke (42) ein unterschiedlicher Winkelversatz besteht.

8. Erntemaschine nach einem der vorhergehenden Ansprüche, **dadurch gekennzeichnet, dass** der Monitor (40) eingerichtet ist, zusammen mit einem Bild wenigstens einer Schneide (23) eine Skala (46) anzuzeigen, die eine Beurteilung der Breite der Schneide (23) ermöglicht.

9. Erntemaschine nach einem der vorhergehenden Ansprüche, **dadurch gekennzeichnet, dass** der Monitor (40) eingerichtet ist, Bilder in unterschiedlichen Maßstäben anzuzeigen.

10. Erntemaschine nach einem der vorhergehenden Ansprüche, **dadurch gekennzeichnet, dass** der Monitor (40) eingerichtet ist, an den Schneiden (27) erfasste Schadstellen (48) durch eine Hervorhebung (50) zu kennzeichnen.

11. Erntemaschine nach Anspruch 10, **dadurch gekennzeichnet, dass** der Monitor (40) eingerichtet ist, unter mehreren erfassten Schadstellen (48) nur eine begrenzte Zahl der schwerwiegendsten durch die Hervorhebung (50) zu kennzeichnen.

## Claims

1. Harvester (1) having a driver's cab (38), at least one pick-up device (8) for picking up harvested crop, a cutting device (17, 18), provided with at least one cutting edge (23), for comminuting the harvested crop which is picked up, and at least one camera (36) which is set up to produce images of the cutting edge (23), **characterised in that** a monitor (40) to reproduce the images produces by the camera (36) is mounted in the driver's cab (38).

2. Harvester according to claim 1, **characterised in that** a grinding device (30, 32, 34) for sharpening the cutting edge (23) is set up to be controlled from the driver's cab (38).

3. Harvester according to claim 2, **characterised in that** the grinding device (30, 32, 34) is accommodated in a housing (25) which is closed during the comminution of harvested crop and open during the sharpening.

4. Harvester according to claim 3, **characterised in that** the camera (36) is accommodated in the housing (25).

5. Harvester according to one of the preceding claims, **characterised in that** the monitor (40) is set up to show superimposed images of a plurality of cutting edges (23) of the cutting device (17, 18).

6. Harvester according to claim 5, **characterised by** a triggering device (42, 44) which is set up to trigger the production of an image of a cutting edge (23) when
the cutting edge (23) is situated in a region specific to it of the field of view of the camera (36).

7. Harvester according to claim 6, **characterised in that** a rotating drum (17) carries the cutting edges (23) and triggering markers (42) able to be sensed by a sensor (44) belonging to the triggering device (42, 44), each cutting edge (23) having one of the triggering markers (42) associated with it and there being a different angular offset between each cutting edge (23) and the triggering marker (42) associated with it.

8. Harvester according to one of the preceding claims, **characterised in that** the monitor (40) is set up to display, together with an image of at least one cutting edge (23), a scale (46) which enables the with of the cutting edge (23) to be assessed.

9. Harvester according to one of the preceding claims, **characterised in that** the monitor (40) is set up to display images on different scales.

10. Harvester according to one of the preceding claims, **characterised in that** the monitor (40) is set up to indicate damaged points (48) sensed on the cutting edges (27) by a means (50) of making them prominent.

11. Harvester according to claim 10, **characterised in that**, where a plurality of damaged points (48) are sensed, the monitor (40) is set up to indicate only a limited number of the most serious of them by the means (50) of making them prominent.

## Revendications

1. Moissonneuse (1) ayant une cabine de conduite (38), au moins un dispositif de ramassage (8) pour ramasser une récolte moissonnée, un dispositif de coupe (17, 18), doté d'au moins un bord de coupe (23), pour broyer la récolte moissonnée qui est ramassée, et d'au moins une caméra (36) qui est adaptée pour produire des images du bord de coupe (23), **caractérisée en ce qu'**un moniteur (40) pour reproduire les images produites par la caméra (36) est monté dans la cabine de conduite (38).

2. Moissonneuse selon la revendication 1, **caractérisée en ce qu'**un dispositif de meulage (30, 32, 34) pour aiguiser le bord de coupe (23) est adapté à être contrôlé à partir de la cabine de conduite (38).

3. Moissonneuse selon la revendication 2, **caractérisée en ce que** le dispositif de meulage (30, 32, 34) est contenu dans un logement (25) qui est fermé pendant le broyage d'une récolte moissonnée et ouvert pendant l'aiguisage.

4. Moissonneuse selon la revendication 3, **caractérisée en ce que** la caméra (36) est contenue dans le logement (25).

5. Moissonneuse selon l'une des revendications précédentes, **caractérisée en ce que** le moniteur (40) est adapté pour montrer des images superposées d'une pluralité de bords de coupe (23) du dispositif de coupe (17, 18).

6. Moissonneuse selon la revendication 5, **caractérisée par** un dispositif de déclenchement (42, 44) qui est adapté pour déclencher la production d'une image d'un abord de coupe (23) lorsque le bord de coupe (23) est situé dans une région qui lui est spécifique du champ de vision de la caméra (36).

7. Moissonneuse selon la revendication 6, **caractérisée en ce qu'**un tambour tournant (17) porte les bords de coupe (23) et des marqueurs de déclenchement (42) capables d'être captés par un capteur (44) appartenant au dispositif de déclenchement (42, 44), chaque bord de coupe (23) ayant un des marqueurs de déclenchement (42) associé avec lui, et un décalage angulaire différent étant entre chaque bord de coupe (23) et le marqueur de déclenchement (42) associé avec lui.

8. Moissonneuse selon l'une des revendications précédentes, **caractérisée en ce que** le moniteur (40) est adapté pour afficher, conjointement avec une image d'au moins un bord de coupe (23), une échelle (46) qui permet l'évaluation de la largeur du bord de coupe (23).

9. Moissonneuse selon l'une des revendications précédentes, **caractérisée en ce que** le moniteur (40) est adapté pour afficher des images sur des échelles différente.

10. Moissonneuse selon l'une des revendications précédentes, **caractérisée en ce que** le moniteur (40) est adapté pour indiquer des points endommagés (48) captés sur les bords de coupe (27) par un moyen (50) destiné à faire ressortir ces derniers.

11. Moissonneuse selon la revendication 10, **caractérisée en ce que**, là où une pluralité de points endommagés (48) sont captés, le moniteur (40) est adapté pour indiquer seulement un nombre limité des plus graves d'entre eux par le moyen (50) destiné à les faire ressortir.
